# EUROPÄISCHE PATENTANMELDUNG

(11) **EP 4 575 202 A1**
(43) Veröffentlichungstag der Anmeldung: **25.06.2025**
(21) Anmeldenummer: 24210063.4
(22) Anmeldetag: 31.10.2024
(51) Int. Cl.: F02C 1/04, F01D 25/24, F02C 6/14, F02C 6/16, F02C 6/18, F02C 7/10

(54) **VORRICHTUNG ZUR ERZEUGUNG VON ENERGIE AUS KOMPRIMIERTER LUFT, SYSTEM MIT EINER SOLCHEN VORRICHTUNG UND VERFAHREN ZUM BETREIBEN DES SYSTEMS**

(30) Priorität: 21.12.2023 DE 102023136277
(71) Anmelder: MAN Energy Solutions SE, 86153 Augsburg (DE)
(72) Erfinder: Mischo, Bob, 8125 Zollikerberg (CH); Schlageter, Dominik, 8197 Rafz (CH); Villinger, Andreas Felix, 8197 Rafz (CH); Pelkey, Tyler Paul, 8152 Opfikon (CH); Stalzer, Florian, 8620 Wetzikon (CH)

(57) **Zusammenfassung**

Vorrichtung zur Erzeugung von Energie aus komprimierter Luft, mit einer Luftturbine (16), die eingerichtet ist, gasförmige Luft ausgehend von einem ersten Druckniveau auf ein zweites Druckniveau zu entspannen und hierbei erste Energie zu gewinnen, mit einer Brennkammer (17), die eingerichtet ist, die in der Luftturbine entspannte Luft zu empfangen und in derselben Kraftstoff zu verbrennen, und mit einer Abgasturbine (18), die eingerichtet ist, bei der Verbrennung des Kraftstoffs in der Brennkammer (17) entstehendes Abgas zu entspannen und hierbei zweite Energie zu gewinnen, wobei zumindest die Luftturbine und die Abgasturbine ein gemeinsames Gehäuse aufweisen.

## Beschreibung

Die Erfindung betrifft eine Vorrichtung zur Erzeugung von Energie aus komprimierter Luft, ein System mit einer solchen Vorrichtung und ein Verfahren zum Betreiben des Systems.

Aus der Praxis sind Liquid-Air-Energy-Storage (LAES)-Einrichtungen sowie Compressed-Air-Energy-Storage (CAES)-Einrichtungen bekannt, um Energie zu speichern und die Energie nachfolgend zu nutzen. So wird in einer Liquid-Air-Energy-Storage-Einrichtung in einem Speicher flüssige Luft gespeichert, die in einem Verdampfer verdampft werden kann. Die verdampfte Luft wird dann über eine Luftturbine geführt, um in der Luftturbine entspannt zu werden und hierbei mechanische Energie zu erzeugen, die dann zum Beispiel genutzt werden kann, um einen Generator oder eine andere Maschine anzutreiben und so elektrische Energie zu erzeugen. In einer Compressed-Air-Energy-Storage-Einrichtung wird komprimierte gasförmige Luft gespeichert, die ebenfalls über eine Luftturbine geführt werden kann, um wiederum in der Luftturbine mechanische Energie zu gewinnen, die zum Beispiel genutzt werden kann, um einen Generator anzutreiben und so elektrische Energie zu gewinnen. Aus der Praxis bekannte Liquid-Air-Energy-Storage (LAES) Einrichtungen sowie Compressed-Air-Energy-Storage (CAES) Einrichtungen verfügen über einen begrenzten Wirkungsgrad. Es besteht Bedarf an einer Vorrichtung zur Erzeugung von Energie aus komprimierter Luft, welche einen höheren Wirkungsgrad aufweist.

Hiervon ausgehend liegt der Erfindung die Aufgabe zu Grunde, eine neuartige Vorrichtung zur Erzeugung von Energie aus komprimierter Luft, ein System mit einer solchen Vorrichtung und ein Verfahren zum Betreiben des Systems zu schaffen.

Diese Aufgabe wird durch eine Vorrichtung zur Erzeugung von Energie aus komprimierter Luft nach Anspruch 1, ein System nach Anspruch 10 oder nach Anspruch 11 und ein Verfahren nach Anspruch 13 gelöst.

Die Vorrichtung zur Erzeugung von Energie aus komprimierter Luft weist eine Luftturbine auf, die eingerichtet ist, gasförmige Luft ausgehend von einem ersten Druckniveau auf ein zweites Druckniveau zu entspannen und hierbei erste Energie zu gewinnen.

Die Vorrichtung zur Erzeugung von Energie aus komprimierter Luft weist ferner eine Brennkammer auf, die eingerichtet ist, die in der Luftturbine entspannte Luft zu empfangen und in derselben Kraftstoff zu verbrennen.

Die Vorrichtung zur Erzeugung von Energie aus komprimierter Luft weist ferner eine Abgasturbine auf, die eingerichtet ist, bei der Verbrennung des Kraftstoffs in der Brennkammer entstehendes Abgas zu entspannen und hierbei zweite Energie zu gewinnen.

Zumindest die Luftturbine und die Abgasturbine weisen ein gemeinsames Gehäuse auf.

Mithilfe der erfindungsgemäßen Vorrichtung zur Erzeugung von Energie aus komprimierter Luft kann aus komprimierter Luft, die zum Beispiel von einer Liquid-Air-Energy-Storage (LAES) Einrichtung oder einer Compressed-Air-Energy-Storage (CAES) Einrichtung bereitgestellt wird, Energie mit hohem Wirkungsgrad gewonnen werden. Dabei wird die komprimierte Luft zunächst in der Luftturbine auf ein erstes Druckniveau entspannt und nachfolgend der Brennkammer zugeführt, in welcher unter Anwesenheit der auf das erste Druckniveau entspannten Luft ein Kraftstoff verbrannt wird und so Abgas erzeugt wird, welches über eine Abgasturbine geführt wird, um so weitere Energie zu erzeugen. Sowohl in der Luftturbine als auch in der Abgasturbine wird demnach Energie erzeugt, und zwar mechanische Energie, die zum Beispiel dazu genutzt werden kann, um zur Erzeugung elektrischer Energie einen Generator anzutreiben.

Gegenüber einer einfachen Luftturbine kann mit der erfindungsgemäßen Vorrichtung mehr als die doppelte Nutzleistung erzeugt werden. So kann bei hohem Wirkungsgrad aus komprimierter Luft Energie gewonnen werden.

Vorzugsweise weisen die Luftturbine, die Brennkammer und die Abgasturbine das gemeinsame Gehäuse auf. Alternativ weisen die Luftturbine und die Abgasturbine das gemeinsame Gehäuse und die Brennkammer ein getrenntes Gehäuse auf. Dann, wenn die Luftturbine, die Brennkammer und die Abgasturbine ein gemeinsames Gehäuse aufweisen, kann die Vorrichtung besonders kompakt bei geringerem Bauraumbedarf und geringem Gewicht ausgeführt werden. Hierdurch kann dann die Anordnung aus Luftturbine, Brennkammer und Abgasturbine besonders flexibel in einer Liquid-Air-Energy-Storage (LAES) Einrichtung oder einer Compressed-Air-Energy-Storage (CAES) Einrichtung positioniert werden. Dann, wenn die Brennkammer in einem getrennten Gehäuse angeordnet ist, erhöhen sich zwar der Bauraumbedarf und das Gewicht der Vorrichtung, es können jedoch thermische Verspannungen am gemeinsamen Gehäuse der Luftturbine und der Abgasturbine reduziert werden.

Vorzugsweise weist die Vorrichtung zur Erzeugung von Energie aus komprimierter Luft einen zwischen die Luftturbine und die Brennkammer geschalteten ersten Wärmetauscher, über den einerseits die in der Luftturbine entspannte und der Brennkammer zuzuführende Luft und andererseits das in der Abgasturbine entspannte Abgas führbar ist, um die in der Luftturbine entspannte Luft stromaufwärts der Brennkammer zu erwärmen. Durch den ersten Wärmetauscher wird die Temperatur der in der ersten Luftturbine entspannten Luft erhöht, wodurch die benötigte Kraftstoffmenge in der Brennkammer reduziert werden kann. So kann der Wirkungsgrad der erfindungsgemäßen Vorrichtung weiter gesteigert werden.

Vorzugsweise weist die Vorrichtung zur Erzeugung von Energie aus komprimierter Luft einen der Luftturbine vorgeschalteten zweiten Wärmetauscher auf, über den einerseits die in der Luftturbine zu entspannende Luft und andererseits das in der Abgasturbine entspannte Abgas führbar ist, um die in der Luftturbine zu entspannende stromaufwärts der Luftturbine zu erwärmen. Auch über den der Luftturbine vorgeschalteten zweiten Wärmetauscher kann der Wirkungsgrad der Vorrichtung zur Erzeugung von Energie aus komprimierter Luft weiter gesteigert werden. So kann durch die Erhöhung der Temperatur der in der Luftturbine zu entspannenden Luft in der Luftturbine mehr Energie gewonnen werden.

Vorzugsweise sind die Luftturbine und die Abgasturbine in einer back-to-back Anordnung derart ausgerichtet, dass die Eintrittsseiten der beiden Turbinen voneinander weg gerichtet sind und die Austrittsseiten der beiden Turbinen einander zugewandt sind. Die back-to-back Anordnung der beiden Turbinen erlaubt einen vorteilhaften thermischen Ausgleich des gemeinsamen Gehäuses von zumindest Luftturbine und Abgasturbine zu einer Welle, welche durch die Luftturbine und Abgasturbine angetrieben wird. Alternativ sind die Luftturbine und die Abgasturbine in einer inline Anordnung derart ausgerichtet, dass eine Austrittsseite einer der beiden Turbinen einer Eintrittsseite einer anderen der beiden Turbinen zugewandt ist.

Ein erfindungsgemäßes System weist die erfindungsgemäße Vorrichtung zur Erzeugung von Energie aus komprimierter Luft und vorzugsweise eine Liquid-Air-Energy-Storage (LAES) Einrichtung auf, die einen Speicher zur Speicherung flüssiger Luft und einen Verdampfer zur Verdampfung der flüssigen Luft aufweist, wobei die verdampfte Luft der Luftturbine als gasförmige, komprimierte Luft zuführbar ist. Die erfindungsgemäße Vorrichtung zur Erzeugung von Energie aus komprimierter Luft kommt besonders bevorzugt in Kombination mit einer Liquid-Air-Energy-Storage (LAES) Einrichtung zum Einsatz, um aus flüssiger Luft Energie zu gewinnen.

Das erfindungsgemäße System kann alternativ zu einer Liquid-Air-Energy-Storage (LAES) Einrichtung auch eine Compressed-Air-Energy-Storage (CAES) Einrichtung aufweisen.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: ein erstes System mit einer ersten erfindungsgemäßen Vorrichtung zur Erzeugung von Energie aus komprimierter Luft,
- Fig. 2: ein zweites System mit einer zweiten erfindungsgemäßen Vorrichtung zur Erzeugung von Energie aus komprimierter Luft,
- Fig. 3: ein drittes System mit einer dritten erfindungsgemäßen Vorrichtung zur Erzeugung von Energie aus komprimierter Luft.

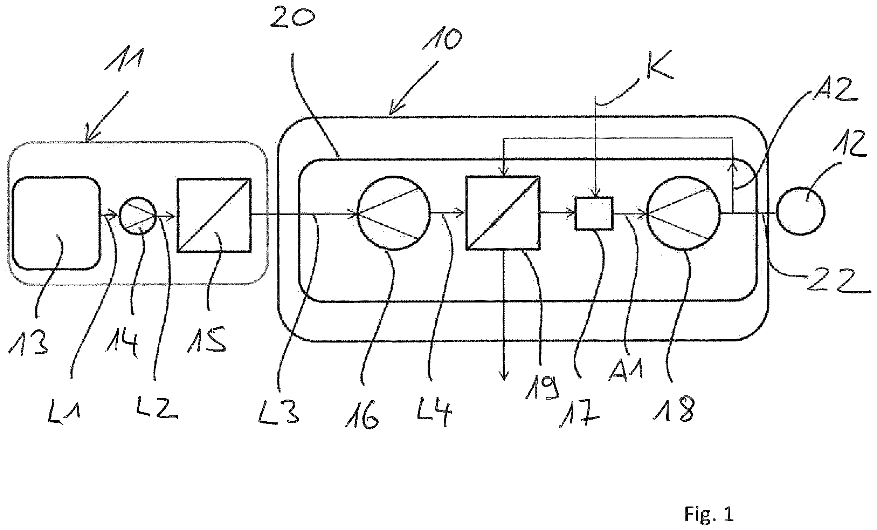

Die Erfindung betrifft eine Vorrichtung 10 zur Erzeugung von Energie aus komprimierter Luft. Fig. 1 zeigt die erfindungsgemäße Vorrichtung 10 im Zusammenhang mit einer Liquid-Air-Energy-Storage (LAES)-Einrichtung 11 sowie einer elektrischen Maschine 12.

Die LAES-Einrichtung 11 verfügt über einen Speicher 13 zur Speicherung flüssiger Luft. Ferner weist die LAES-Einrichtung 11 im gezeigten Ausführungsbeispiel eine Pumpe 14 auf, die eingerichtet ist, die flüssige Luft einem Verdampfer 15 der LAES-Einrichtung 11 bereitzustellen. Im Verdampfer 15 kann die flüssige Luft verdampft werden, um so komprimierte gasförmige Luft bereitzustellen, aus welcher dann mithilfe der Vorrichtung 10 Energie gewonnen werden kann, die in Fig. 1 beispielsweise dazu genutzt wird, um die elektrische Maschine 12 anzutreiben.

Die Pumpe 14 ist bei einer LAES-Einrichtung 11 optional. Die flüssige Luft kann auch auf andere Weise aus dem Speicher 13 entnommen und dem Verdampfer 15 zugeführt werden. Dann, wenn eine Pumpe 14 vorhanden ist, kann dieselbe als Kryopumpe ausgeführt sein.

Die erfindungsgemäße Vorrichtung 10 zur Erzeugung von Energie aus komprimierter Luft weist eine Luftturbine 16 auf. Die Luftturbine 16 ist eingerichtet, die komprimierte Luft von einem ersten Druckniveau auf ein zweites Druckniveau zu entspannen und hierbei erste Energie zu gewinnen.

Ferner weist die erfindungsgemäße Vorrichtung zur Erzeugung von Energie aus komprimierter Luft eine Brennkammer 17 auf. Die Brennkammer 17 ist eingerichtet, die in der Luftturbine 16 entspannte Luft zu empfangen und in derselben unter Anwesenheit der Luft einen Kraftstoff zu verbrennen und hierbei Abgas zu erzeugen. Der zu verbrennende Kraftstoff wird in der Brennkammer 17 gezündet.

Die erfindungsgemäße Vorrichtung 10 zur Erzeugung von Energie aus komprimierter Luft weist weiterhin eine Abgasturbine 18 auf. Die Abgasturbine 18 ist eingerichtet, das bei der Verbrennung des Kraftstoffs in der Brennkammer 17 entstehende Abgas zu entspannen und hierbei zweite Energie zu gewinnen.

Vorzugsweise treiben die Luftturbine 16 und die Abgasturbine 18 eine gemeinsame Welle 22 und über die gemeinsame Welle 22 gemeinsam die elektrische Maschine 12 an. Dabei wird die elektrische Maschine 12 vorzugsweise generatorisch betrieben, um so elektrische Energie bereitzustellen.

Gemäß Fig. 1 wird demnach flüssige Luft L1 mit Hilfe der Pumpe 14 aus dem Speicher 13 entnommen, die als flüssige Luft L2 von der Pumpe 14 dem Verdampfer 15 bereitgestellt wird. Stromabwärts des Verdampfers 15 liegt gasförmige, komprimierte Luft L3 vor, die über die Luftturbine 16 strömt, wobei die Luftturbine 16 gasförmige Luft L4 verlässt, die auf das zweite Druckniveau entspannt ist. Die sich auf dem zweiten Druckniveau befindende Luft L4 wird der Brennkammer 17 zugeführt, und zwar zusammen mit Kraftstoff K, wobei bei der Verbrennung des Kraftstoffs K Abgas entsteht, welches als Abgas A1 die Brennkammer 17 verlässt und in der Abgasturbine 18 entspannt wird. Entspanntes Abgas A2 wird von der Abgasturbine 18 abgeführt.

In Fig. 1 umfasst die Vorrichtung 10 einen ersten Wärmetauscher 19, der zwischen die Luftturbine 16 und die Brennkammer 17 geschaltet ist. Über diesen ersten Wärmetauscher 19 wird einerseits die in der Luftturbine 16 entspannte Luft L4 und andererseits das in der Abgasturbine 18 entspannte Abgas A2 geführt, um so thermische Energie des Abgases A2 auf die entspannte Luft L4 zu übertragen und so die Temperatur der entspannten Luft stromaufwärts der Brennkammer 17 zu erhöhen. Hierdurch kann der Wirkungsgrad der erfindungsgemäßen Vorrichtung 10 zur Erzeugung von Energie aus komprimierter Luft erhöht werden.

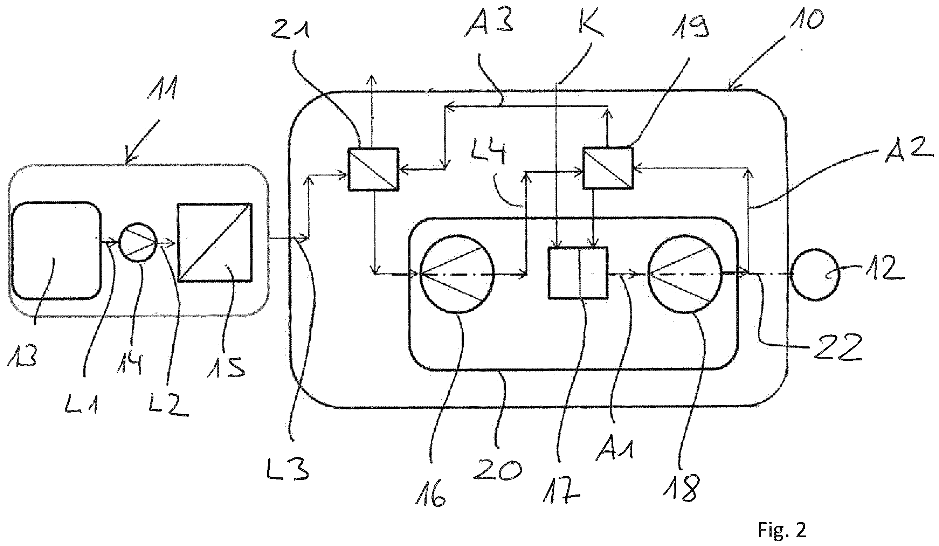

Fig. 2 zeigt ein Blockschaltbild einer zweiten erfindungsgemäßen Vorrichtung 10 zur Erzeugung von elektrischer Energie aus komprimierter Luft wieder zusammen mit der LAES-Einrichtung 11, wobei zur Vermeidung unnötiger Wiederholungen in Fig. 2 für gleiche Baugruppen gleiche Bezugsziffern verwendet werden wie in Fig. 1 und auf die diesbezüglichen Ausführungen zur Fig. 1 verwiesen wird. Nachfolgend wird nur auf solche Details eingegangen, durch die sich das Ausführungsbeispiel der Fig. 2 vom Ausführungsbeispiel der Fig. 1 unterscheidet.

In Fig. 1 weisen die Luftturbine 16, die Abgasturbine 18, die Brennkammer 17 sowie der erste Wärmetauscher 19 ein gemeinsames Gehäuse 20 auf. Hierdurch kann eine besonders kompakte, bauraumsparende und gewichtsreduzierte Bauform gewährleistet werden. In Fig. 2 hingegen weisen lediglich die Luftturbine 16, die Abgasturbine 18 und die Brennkammer 17 das gemeinsame Gehäuse 20 auf, der erste Wärmetauscher 19 ist nicht in das gemeinsame Gehäuse 20 integriert, sondern vielmehr als separate Baugruppe mit einem separaten Gehäuse ausgeführt.

Ein weiterer Unterschied der Fig. 2 zur Fig. 1 besteht darin, dass das über den ersten Wärmetauscher 19 geführte Abgas A2, welches in der Abgasturbine 18 entspannt wurde, nachfolgend als Abgas A3 über einen zweiten Wärmetauscher 21 geführt wird, der in Strömungsrichtung der in der Luftturbine 16 zu entspannenden Luft gesehen stromaufwärts der Luftturbine 16 angeordnet ist. Über diesen zweiten Wärmetauscher 21 wird einerseits die komprimierte, gasförmige Luft L3 und andererseits das Abgas A3 geführt, um die in der Luftturbine 16 zu entspannende Luft L3 stromaufwärts der Luftturbine 16 zu erwärmen. Auch hierdurch kann der Wirkungsgrad weiter gesteigert werden.

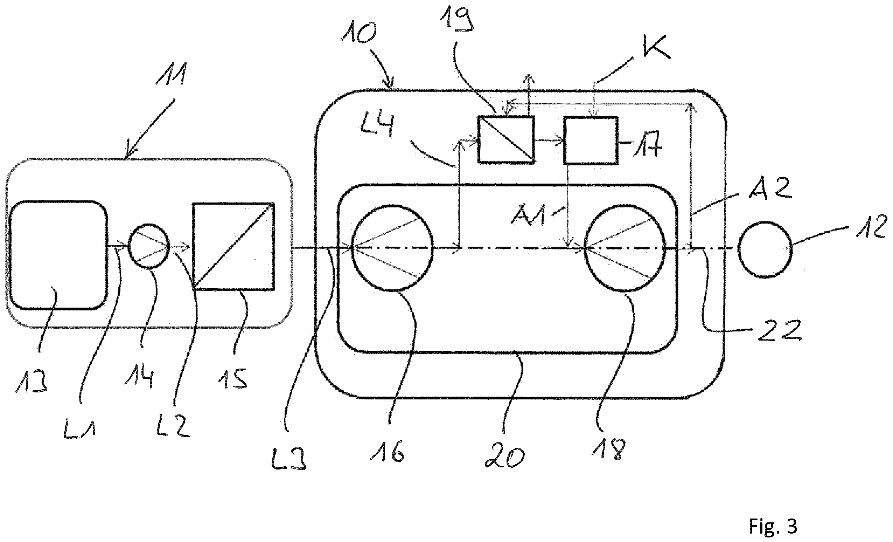

Eine weitere erfindungsgemäße Vorrichtung 10 zur Erzeugung von Energie aus komprimierter Luft zeigt Fig. 3, wobei auch in Fig. 3 wieder die LAES-Einrichtung 11 gezeigt ist und zur Vermeidung unnötiger Wiederholungen für gleiche Baugruppen gleiche Bezugsziffern verwendet werden wie in Fig. 1 und nachfolgend nur auf solche Details eingegangen wird, durch die sich das Ausführungsbeispiel der Fig. 3 vom Ausführungsbeispiel der Fig. 1 unterscheidet.

Im Ausführungsbeispiel der Fig. 3 weisen lediglich die Luftturbine 16 und die Abgasturbine 18 ein gemeinsames Gehäuse 20 auf. In Fig. 3 sind sowohl der erste Wärmetauscher 19 als auch die Brennkammer 17 nicht in das gemeinsame Gehäuse 20 integriert, sondern als separate Baugruppe mit einem separaten Gehäuse ausgeführt. Hierdurch ist das gemeinsame Gehäuse 20 von Luftturbine 16 und Abgasturbine 18 einer geringeren thermischen Belastung ausgesetzt als in Fig. 1 sowie ebenfalls als in Fig. 2, sodass thermische Verformungen reduziert werden können. Dies ist von Vorteil für die von den beiden Turbinen 16, 18 angetriebene Welle 22, über welche die elektrische Maschine 12 angetrieben wird.

Bei der hier vorliegenden Erfindung wird demnach komprimierte, gasförmige Luft L3, die im gezeigten Ausführungsbeispielen von der LAES-Einrichtung 11 bereitgestellt wird, auf ein Druckniveau eines Brennkammerdrucks der Brennkammer 17 entspannt.

Im Unterschied zu den gezeigten Ausführungsbeispielen kann die komprimierte, gasförmige Luft auch von einer Compressed-Air-Energy-Storage (CAES)-Einrichtung bereitgestellt werden.

Bei einer CAES-Einrichtung entfällt der Verdampfer 15. Anstelle der Pumpe 14 kann bei einer CAES-Einrichtung ein Kompressor vorhanden sein.

Die der Brennkammer 17 zugeführte Luft wird genutzt, um in der Brennkammer 17 Kraftstoff K zu verbrennen, wobei hierbei in der Brennkammer 17 das Abgas A1 entsteht, welches über die Abgasturbine 18 zur Entspannung geführt wird. Sowohl in der Luftturbine 16 als auch in der Abgasturbine 18 wird demnach jeweils mechanische Energie gewonnen, die dazu genutzt wird, über eine vorzugsweise gemeinsame Welle 22 eine elektrische Maschine 12 vorzugsweise generatorisch anzutreiben, um so elektrische Energie zu erzeugen.

Der in der Luftturbine 16 entspannten Luft wird demnach durch die Verbrennung des Kraftstoffs K thermische Energie zugeführt, wobei das Abgas A1 in der Abgasturbine 18 auf Umgebungsdruck entspannt wird. Restwärme des Abgases A2 kann in mindestens einem Wärmetauscher 19, 21 genutzt werden, um die in der Luftturbine 16 entspannte Luft L4 und/oder die in der Luftturbine 16 zu entspannende Luft L3 zu erwärmen.

Mit der Erfindung kann deutlich mehr Leistung abgegeben werden, als dies eine reine Luftturbine in Verbindung mit einer LAES-Einrichtung oder CAES-Einrichtung tun kann. So kann in etwa mehr als das Doppelte an Leistung abgegeben werden.

Die Wärme des Abgases kann in den Ausführungsbeispielen der Fig. 1 bis 3 zur Vorwärmung des Kraftstoffs K genutzt werden.

Alternativ oder zusätzlich ist es auch möglich, das Abgas, welches die Abgasturbine 18 verlässt, bei einer LAES-Einrichtung 11 über den Verdampfer 15 zu führen, um so Wärme des Abgases im Bereich des Verdampfers 15 zu nutzen.

Dann, wenn eine LAES-Einrichtung 11 vorhanden ist, kann die flüssige Luft zum Kühlen von Baugruppen wie z.B. der Brennkammer 17 verwendet werden, und so eine höhere Verbrennungstemperatur oder Betriebstemperatur zu ermöglichen. Alternativ oder zusätzlich kann flüssige Luft genutzt werden, werden um Luft- oder Abgastemperaturen oder Massenströme zu regeln und/oder um die Verbrennung des Kraftstoffs zu optimieren und/oder Emissionen zu reduzieren.

Vorzugsweise sind die Luftturbine 16 und die Abgasturbine 18 in einer back-to-back Anordnung derart ausgerichtet, dass die Eintrittsseiten der beiden Turbinen 16, 18 voneinander weg gerichtet sind und die Austrittsseiten der beiden Turbinen 16, 18 einander zugewandt sind. Diese back-to-back Anordnung der beiden Turbinen 16, 18 ist in den Fig. 1 bis 3 nicht gezeigt, dieselbe erlaubt einen vorteilhaften thermischen Ausgleich des gemeinsamen Gehäuses von zumindest Luftturbine 16 und Abgasturbine 18 zu einer Welle 22, welche durch die Luftturbine 16 und Abgasturbine 20 angetrieben wird.

Die Erfindung erlaubt es, mit hohem Wirkungsgrad aus komprimierter Luft Energie zu gewinnen.

Die Erfindung betrifft weiterhin ein Verfahren zum Betreiben des Systems aus der Vorrichtung 10, der CAES-Einrichtung oder LAES-Einrichtung 11 und der elektrischen Maschine 12, die an ein elektrisches Stromnetz gekoppelt ist.

Dann, wenn die Netzfrequenz des elektrischen Stromnetzes kleiner als ein Sollwert ist, wird die elektrische Maschine 12 zur Netzstabilisierung des elektrischen Stromnetzes 12 generatorisch betrieben. In diesem Fall wird zur Netzstabilisierung in einer Produktionsphase elektrischer Energie in der Vorrichtung 10 gewonnene mechanische Energie in elektrische Energie gewandelt und in das Stromnetz eingespeist. In diesem Fall ist die CAES-Einrichtung oder LAES-Einrichtung 11 an die Vorrichtung 10 angebunden.

Dann, wenn eine Netzfrequenz des elektrischen Stromnetzes größer als ein Sollwert ist, wird die elektrische Maschine 12 zur Netzstabilisierung des elektrischen Stromnetzes motorisch betrieben. In diesem Fall wird zur Netzstabilisierung elektrische Energie in Verlustleistung gewandelt. In diesem Fall ist die CAES-Einrichtung oder LAES-Einrichtung 11 vorzugsweise von der Vorrichtung 10 getrennt. Die elektrische Maschine 12 wird dann, wenn die CAES-Einrichtung oder LAES-Einrichtung 11 von der Vorrichtung 10 getrennt, vorzugsweise auf Minimaldrehzahl betrieben, um innerhalb kürzester Zeit in eine nächste Produktionsphase elektrischer Energie zu wechseln.

Die Erfindung betrifft demnach auch die Verwendung des Systems aus der Vorrichtung 10, der CAES-Einrichtung oder LAES-Einrichtung 11 und der elektrischen Maschine 12 zur Netzstabilisierung eines elektrischen Stromnetzes, an welches die elektrische Maschine 12 angeschlossen ist.

### Bezugszeichenliste

- 10: Vorrichtung
- 11: LAES-Einrichtung
- 12: elektrische Maschine
- 13: Speicher
- 14: Pumpe
- 15: Verdampfer
- 16: Luftturbine
- 17: Brennkammer
- 18: Abgasturbine
- 19: erster Wärmetauscher
- 20: Gehäuse
- 21: zweiter Wärmetauscher
- 22: Welle

## Patentansprüche

1. Vorrichtung zur Erzeugung von Energie aus komprimierter Luft,
mit einer Luftturbine (16), die eingerichtet ist, gasförmige Luft ausgehend von einem ersten Druckniveau auf ein zweites Druckniveau zu entspannen und hierbei erste Energie zu gewinnen,
mit einer Brennkammer (17), die eingerichtet ist, die in der Luftturbine entspannte Luft zu empfangen und in derselben Kraftstoff zu verbrennen,
mit einer Abgasturbine (18), die eingerichtet ist, bei der Verbrennung des Kraftstoffs in der Brennkammer (17) entstehendes Abgas zu entspannen und hierbei zweite Energie zu gewinnen
wobei zumindest die Luftturbine (16) und die Abgasturbine (18) ein gemeinsames Gehäuse (20) aufweisen.

2. Vorrichtung nach Anspruch 1, **dadurch gekennzeichnet, dass** die Luftturbine (16), die Brennkammer (17) und die Abgasturbine (18) das gemeinsame Gehäuse (20) aufweisen.

3. Vorrichtung nach Anspruch 1, **dadurch gekennzeichnet, dass** die Luftturbine (16) und die Abgasturbine (18) das gemeinsame Gehäuse (20) aufweisen sind, und dass die Brennkammer (17) ein getrenntes Gehäuse aufweist.

4. Vorrichtung nach einem der Ansprüche 1 bis 3, **gekennzeichnet durch** einen zwischen die Luftturbine (16) und die Brennkammer (17) geschalteten ersten Wärmetauscher (19), über den einerseits die in der Luftturbine (16) entspannte und der Brennkammer (17) zuzuführende Luft und andererseits das in der Abgasturbine (18) entspannte Abgas führbar ist, um die in der Luftturbine (16) entspannte stromaufwärts der Brennkammer (17) zu erwärmen.

5. Vorrichtung nach einem der Ansprüche 1 bis 4, **gekennzeichnet durch** einen der Luftturbine (16) vorgeschalteten zweiten Wärmetauscher (21), über den einerseits die in der Luftturbine (16) zu entspannende Luft und andererseits das in der Abgasturbine (18) entspannte Abgas führbar ist, um die in der Luftturbine (16) zu entspannende Luft stromaufwärts der Luftturbine (16) zu erwärmen.

6. Vorrichtung nach Anspruch 4 und 5, **dadurch gekennzeichnet, dass** der erste Wärmetauscher (19) eingerichtet ist, das in der Abgasturbine (18) entspannte Abgas zu empfangen und anschließend dem zweiten Wärmetauscher (21) zur Verfügung zu stellen.

7. Vorrichtung nach Anspruch 4, 5 oder 6, **dadurch gekennzeichnet, dass** der erste Wärmetauscher (19) in dem gemeinsamen Gehäuse (20) angeordnet ist.

8. Vorrichtung nach einem der Ansprüche 1 bis 7, **dadurch gekennzeichnet, dass** die Luftturbine (16) und die Abgasturbine (18) in einer back-to-back Anordnung derart ausgerichtet sind, dass die Eintrittsseiten der beiden Turbinen (16, 18) voneinander weg gerichtet sind und die Austrittsseiten der beiden Turbinen (16, 18) einander zugewandt sind.

9. Vorrichtung nach einem der Ansprüche 1 bis 8, **dadurch gekennzeichnet, dass** die Luftturbine (16) und die Abgasturbine (18) in einer inline Anordnung derart ausgerichtet sind, dass eine Austrittsseite einer der beiden Turbinen (16) einer Eintrittsseite einer anderen der beiden Turbinen (18) zugewandt ist.

10. System mit einer Vorrichtung (10) nach einem der Ansprüche 1 bis 9 und mit einer Liquid-Air-Energy-Storage-Einrichtung (11), die einen Speicher (13) zur Speicherung flüssiger Luft und einen Verdampfer (15) zur Verdampfung der flüssigen Luft aufweist, wobei die verdampfte Luft der Luftturbine (16) zuführbar ist.

11. System mit einer Vorrichtung (10) nach einem der Ansprüche 1 bis 9 und mit einer Compressed-Air-Energy-Storage-Einrichtung, die einen Speicher zur Speicherung komprimierter gasförmiger Luft aufweist, wobei die komprimierte gasförmige Luft der Luftturbine zuführbar ist.

12. System nach Anspruch 11, **gekennzeichnet durch** eine mit der Vorrichtung (10) nach einem der Ansprüche 1 bis 9 gekoppelte, motorisch und generatorisch betreibbare elektrische Maschine (12).

13. Verfahren zum Betreiben eines Systems nach Anspruch 12, wobei zur Netzstabilisierung eines mit der elektrischen Maschine (12) gekoppelten elektrischen Stromnetzes dann, wenn eine Netzfrequenz des elektrischen Stromnetzes größer als ein Sollwert ist, die elektrische Maschine (12) motorisch betrieben wird, oder dann, wenn eine Netzfrequenz des elektrischen Stromnetzes kleiner als ein Sollwert ist, die elektrische Maschine (12) generatorisch betrieben wird.
